# EUROPÄISCHE PATENTSCHRIFT

(11) **EP 3 325 801 B1**
(45) Veröffentlichungstag und Bekanntmachung des Hinweises auf die Patenterteilung: **17.11.2021**
(21) Anmeldenummer: 16785334.0
(22) Anmeldetag: 30.09.2016
(51) Int. Cl.: F03D 13/25

(54) **OFFSHORE-WINDPARK**
OFFSHORE WIND FARM
PARC ÉOLIEN EN MER

(30) Priorität: 08.12.2015 DE 102015121371
(43) Veröffentlichungstag der Anmeldung: 30.05.2018
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2016/100459
(87) Internationale Veröffentlichungsnummer: WO 2017/097286

(56) Entgegenhaltungen:
- WO-A2-2008/047011
- WO-A2-2010/104565
- DE-A1-102012 007 613
- DE-U1-202013 100 004
- JP-A- 2004 176 626
- US-A1- 2010 219 645

## Beschreibung

Die Erfindung betrifft einen Offshore-Windpark mit einer Mehrzahl von Gründungselementen, die die Ecken einer Mehrzahl von parkettierten Hexagonen ausbildend angeordnet sind, und einer Mehrzahl von schwimmenden Offshore-Windenergieanlagen, wobei jeweils eine schwimmende Offshore-Windenergieanlage innerhalb je eines Hexagons mit den das Hexagon ausbildenden Gründungselementen verbunden ist.

Die Erfindung betrifft auch ein Verfahren zum Errichten eines Offshore-Windparks mit den vorgenannten Merkmalen.

Aus der DE 10 2012 007 613 A1 ist bereits eine Anordnung für einen Windpark bestehend aus schwimmenden Offshore-Windenergieanlagen bekannt, die eine aus einer Mehrzahl von hexagonal angeordneten Gründungselementen gebildete Parkettierung aufweist, wobei je eine schwimmende Windenergieanlage innerhalb des Umrisses eines Hexagons verankert ist.

Aufgabe dieser bekannten technischen Lösung war es, eine schwingungsdämpfende Anbindung der schwimmenden Windenergieanlagen an Offshore-Gründungselementen zu schaffen, um horizontalen und vertikalen Verschiebungen der Anlagen durch eine in der Anmeldung bezeichnete übliche "weiche Fixierung" entgegenzuwirken.

Als Lösung sieht die DE 10 2012 007 613 A1 vor, jede schwimmende Windenergieanlage eines Windparks jeweils mittels einer Mehrzahl von Diagonalzugsträngen und gegebenenfalls zusätzlich mittels einer Mehrzahl von vertikalen Verankerungssträngen so zu fixieren, dass "die Fesselung des Objekts quasi in allen drei Dimensionen vollkommen ist".

Als Zugelemente bzw. Verankerungsstränge sind entweder ein massives Stabwerk oder massiv ausgebildete Gliederketten vorgesehen, die mittels Winden unter Spannung gehalten werden. Die schwimmenden Offshore-Windenergieanlagen sind somit starr im Mittelpunkt eines Hexagons verankert, wobei die Diagonalzugstränge benachbarter Windenergieanlagen an Gründungselementen verankert sind, die von den benachbarten Windenergieanlagen gemeinsam zur Verankerung benutzt werden.

Nachteilig an dieser Art Windpark ist jedoch der hohe Aufwand bei der Errichtung des Windparks und dessen Einrichtung mit Diagonalzugsträngen, deren Vorspannung exakt zu definieren und einzuhalten ist, damit die Windenergieanlagen ortsfest und schwingungsfrei installiert werden können.

Nachteilig an der starren Fixierung ist jedoch auch, dass diese Art Windpark hinsichtlich seiner zur Verankerung verwendeten Strukturen einem hohen Verschleiß und damit einem hohen Wartungsaufwand unterliegt. Nicht nur, dass die Seilwinden oder die das Stabwerk mit der Windenergieanlage und/oder der Gründung verbindenden Verbindungsmittel einer permanenten hohen dynamischen Belastung ausgesetzt sind und daher einer regelmäßigen Kontrolle und Wartung bedürfen.

Weitere Verankerungssysteme für schwimmende Windenergieanlagen sind aus der DE 20 2013 100 004 U1 und der JP 2004/176626 A bekannt.

Aufgabe der Erfindung ist es daher, einen Windpark zu schaffen, der einfach, schnell und kostengünstig zu installieren und hinsichtlich seiner Gründungselemente langlebig ist.

Diese Aufgabe wird erfindungsgemäß durch den Windpark mit den Merkmalen von Anspruch 1 und durch ein Verfahren zum Errichten eines Offshore-Windparks nach Anspruch 3 gelöst. Die Unteransprüche geben vorteilhafte Ausgestaltungen der Erfindung wieder. Grundgedanke der Erfindung ist es, einen Windpark mit einer von mehreren schwimmenden Windenergieanlagen gemeinsam genutzten Gründungselementen zu schaffen, wobei die Gründungselemente hexagonal angeordnet sind und die Windenergieanlagen innerhalb dieser hexagonalen Struktur vertikal und horizontal beweglich sind.

Dieses wird einerseits durch die Verwendung von Gründungselementen ermöglicht, die nicht nur exakt positioniert, sondern auch Horizontallasten und Vertikallasten aufnehmen können. Gegenüber herkömmlichen Ankern, die weder exakt positioniert, noch Vertikallasten aufnehmen können, ist eine exakte Positionierung der erfindungsgemäßen Gründungselemente in Form von parkettierten regelmäßigen Hexagonen möglich, die eine optimale Lastverteilung auf die Gründungselemente bewirkt.

Andererseits verringert eine Verbindung der schwimmenden Windenergieanlagen mit den Gründungselementen mittels Ketten und/oder Seilen oder einer Kombination aus Kette und Seil im Mittel die jeweils auf ein Gründungselement wirkenden dynamischen Lasten dadurch, dass die Verbindungsmittel im Ausgangszustand - also bei Anordnung einer schwimmenden Windenergieanlagen im Mittelpunkt eines Hexagons - nicht gespannt sind, sondern eine Länge aufweisen, die eine horizontale und vertikale Bewegung der schwimmenden Windenergieanlage am bzw. vom Mittelpunkt des Hexagons erlauben. Die Verbindungsmittel hängen also im Ausgangszustand durch.

Driftet eine Anlage wird dabei nur das entgegen der Driftrichtung angeordnete (oder nur einige in dieser Richtung liegende) Verbindungsmittel gespannt - die in Driftrichtung angeordneten Verbindungsmittel bleiben weiterhin entspannt, d.h. durchhängend.

Durch die exakte Anordnung der Gründungselemente, die nicht nur zügig, sondern aufgrund der Parkettierung auch materialsparend durchgeführt werden kann, und eine Verbindung der schwimmenden Windenergieanlagen mit den Gründungselementen mittels Ketten und/oder Seilen oder einer Kombination aus Ketten und Seilen ist eine gegenüber herkömmlichen Methoden relativ unaufwändige Anlage von Windparks möglich, die auch in mehreren Stufen verlaufen kann.

Erfindungsgemäß vorgesehen ist also ein Offshore-Windpark mit einer Mehrzahl von Gründungselementen, die die Ecken einer Mehrzahl von parkettierten Hexagonen ausbildend angeordnet sind, und einer Mehrzahl von schwimmenden Offshore-Windenergieanlagen, wobei jeweils eine schwimmende Offshore-Windenergieanlage innerhalb je eines Hexagons mit den das Hexagon ausbildenden Gründungselementen verbunden ist, wobei die schwimmenden Offshore-Windenergieanlagen mit den Gründungselementen mittels als Kette und/oder Seil oder einer Kombination aus Kette und Seil ausgebildeten Verbindungsmitteln verbunden sind und die Verbindungsmittel eine Länge aufweisen, die ein Driften der Offshore-Windenergieanlagen innerhalb einer Kreisfläche mit einem Radius von bis zu 10 % der Hexagon-Umkreisradien um den jeweiligen Hexagon-Mittelpunkt zulassen.

Die Gründungselemente sind derart eingerichtet, dass diese sowohl horizontalen Zuglasten als auch vertikalen Zuglasten standhalten können. Die Gründungselemente sind bevorzugt ausgewählt aus der Gruppe von Gründungselementen bestehend aus Gründungspfahl, Schwergewichtsgründung und Suction-Bucket-Fundament.

Bei der Installation von Windparks im Bereich von homogenen Gewässerböden, ist insbesondere die Verwendung von Suction-Bucket-Fundamenten bevorzugt. Das Suction-Bucket-Fundament besteht aus einem nach unten geöffneten Stahlzylinder, der auf den Gewässerboden gesetzt und anschließend leergepumpt wird. Der so im Inneren des Fundaments erzeugte Unterdruck zieht das Suction-Bucket-Fundament in den Boden, wobei das Bodenmaterial im Inneren des Zylinders das Suction-Bucket-Fundament stützt und im Gewässerboden verankert.

Die Installation von Suction-Bucket-Fundamenten ist positionsgenau, sehr einfach und schnell ausführbar und lässt sich auch leicht wieder dadurch entfernen, dass sich das Fundament durch Einpumpen von Luft in den Zylinder aus dem Gewässerboden abhebt.

Dadurch, dass die Seile oder Ketten eine Länge aufweisen, die größer als die Distanz zwischen dem Gründungselement eines Hexagons und dem Anschlagpunkt des Seils oder der Kette an der innerhalb des Hexagons auf der Wasseroberfläche angeordneten Offshore-Windenergieanlage bei deren Positionierung in dessen Mittelpunkt ist, hängen die Verbindungsmittel durch, wobei insbesondere ein dem Gründungselement naher Abschnitt des Verbindungsmittels auf dem Gewässerboden aufliegt.

Die Gründungselemente schränken bei gespannter Seil- oder Kettenlänge die Bewegungsfreiheit der Windenergieanlage an der Gewässeroberfläche in Form einer endgültigen Grenze vollständig ein. Diese Grenze liegt erfindungsgemäß in einem Umkreis mit einem Radius von maximal 10 % der Hexagon-Umkreisradien um den Mittelpunkt des jeweiligen Hexagons.

Dabei ist ein exaktes Ablängen der Ketten oder Seile - so wie es für ein Verspannen der Windenergieanlagen notwendig wäre - nicht erforderlich, sodass durch die Erfindung ein schnelles und einfaches Arbeiten bei der Installation eines derartigen Windparks ermöglicht ist.

Bevorzugt sind die als Kombination aus Kette und Seil ausgebildeten Verbindungsmittel mit ihrem Kettenanteil an den Gründungselementen und mit ihrem Seilanteil an der schwimmenden Offshore-Windenergieanlage (gegebenenfalls mittels einer Boje) verbunden.

Die Windenergieanlagen sind mit einem schwimmenden Fundament ausgebildet, wobei die Verbindungsmittel jeweils an einem einzigen peripher angeordneten Punkt mit der Windenergieanlage, bevorzugt mit deren Fundament verbunden sind. Insbesondere sind die Windenergieanlagen so ausgestaltet, dass diese sich selbsttätig je nach Windrichtung ausrichten und in Windrichtung driften.

Zur Errichtung eines derartigen Windparks mit den zuvor genannten Merkmalen ist erfindungsgemäß auch ein Verfahren zum Errichten eines derartigen Offshore-Windparks vorgesehen, das im Hinblick auf den Arbeitsaufwand und die zur Errichtung benötigte Zeit sehr effizient ausgestaltet ist. Mit dem Verfahren ist es auch möglich - je nach Wetterlage - einzelne Schritte vorzunehmen und die weiteren Schritte auf einen späteren Zeitpunkt zu verschieben.

Das erfindungsgemäße Verfahren zum Errichten eines Offshore-Windparks sieht die Schritte vor: Einbringen einer Mehrzahl von Gründungselementen in den Boden eines Gewässers derart, dass die Gründungselemente die Ecken einer Mehrzahl von parkettierten Hexagonen ausbilden; Verbinden der jeweils ein Hexagon ausbildenden Gründungselemente mit einer gemeinsamen Boje mittels einer Mehrzahl von Verbindungsmitteln, die jeweils als Kette und/oder Seil oder einer Kombination aus Kette und Seil ausgebildet sind; und Verbinden der an der Boje befestigten Verbindungsmittel mit einer schwimmenden Windenergieanlage.

Vorteilhafterweise erfolgt das Einbringen der Gründungselemente zur Ausbildung der regelmäßigen Hexagone an einer Position, die mittels eines Positionsbestimmungssystems, z.B. NAVSTAR GPS, DGPS oder AGPS, vorbestimmt ist.

Eine besonders vorteilhafte Ausbildung des Verfahrens wird erreicht, wenn eine Boje als Kupplung zum Verbinden der Seile oder Ketten mit der schwimmenden Windenergieanlage ausgebildet ist. Bei dieser Ausgestaltung muss lediglich die Boje mit der schwimmenden Windenergieanlage verbunden werden, sodass die an der Boje befestigten Seile oder Ketten nicht in einem zusätzlichen Schritt von der Boje gelöst und mit der Windenergieanlage verbunden werden müssen.

Des Weiteren muss die Offshore- Windenergieanlage natürlich mit einem Seekabel verbunden werden. Das Seekabel kann dabei - wie auch bei den Seilen bzw. Ketten oben beschrieben - mit der Boje verbunden sein bevor die Windenergieanlage zum Windpark verbracht wird.

Ist die Boje - wie oben genannt - als mechanische Kupplung ausgebildet oder weist diese ein Kupplungselement zum Verbinden mit der schwimmenden Windenergieanlage auf, bietet es sich dabei auch an die Boje als elektrische Kupplung zum Verbinden des Seekabels mit den elektrischen Einrichtungen der Windenergieanlage auszubilden. So können die mechanische und die elektrische Verbindung in einem Schritt erfolgen.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Planskizze eines ersten Ausführungsbeispiels eines besonders bevorzugt ausgestalteten Windparks nach der Erfindung in Draufsicht;
- Fig. 2: eine Planskizze eines zweiten Ausführungsbeispiels eines besonders bevorzugt ausgestalteten Windparks nach der Erfindung in Draufsicht;
- Fig. 3: einen Ausschnitt eines Windparks nach der Erfindung mit einigen benachbart angeordneten schwimmenden Windenergieanlagen in Ruhestellung; und
- Fig. 4: den Ausschnitt des Windparks aus Fig. 3 unter Belastung bei einer Windrichtung von links.

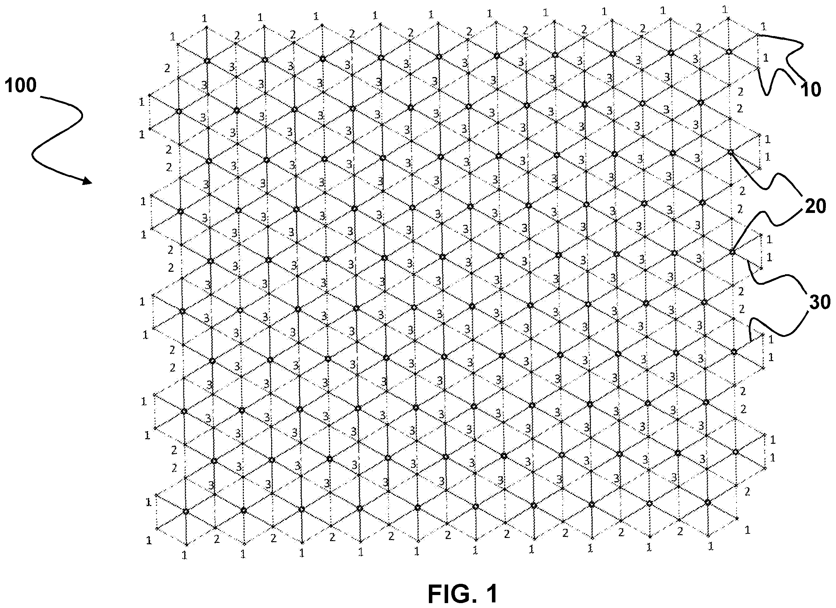

Fig. 1 zeigt eine Planskizze eines ersten Ausführungsbeispiels eines besonders bevorzugt ausgestalteten Windparks nach der Erfindung in Draufsicht.

Der Windpark 100 besteht aus einer Vielzahl von schwimmenden Windenergieanlagen 20, die jeweils innerhalb eines einer Vielzahl von parkettiert angeordneten Hexagonen, deren Ecken von in den Gewässerboden eingebrachten Gründungselementen 10 gebildet werden, angeordnet sind.

Die schwimmenden Windenergieanlagen 20 sind dabei mittels Verbindungsmitteln 30 mit den Gründungselementen 10 verbunden, die als Kette oder als Seil oder aus einer Kombination aus Kette und Seil bestehen.

Jeweils sechs Gründungselemente 10 bilden ein Hexagon, wobei die Gründungselemente 10 aufgrund der parkettierten Anordnung die Ecke nicht nur eines, sondern die Ecke von zwei oder zumeist drei benachbarten Hexagonen bilden. Die jeweils an den Gründungselementen 10 angegebenen Zahlen weisen auf die Anzahl der Hexagone und damit zugleich auf die Anzahl der an dem jeweiligen Gründungselement 10 angebundenen Windenergieanlagen 20 hin.

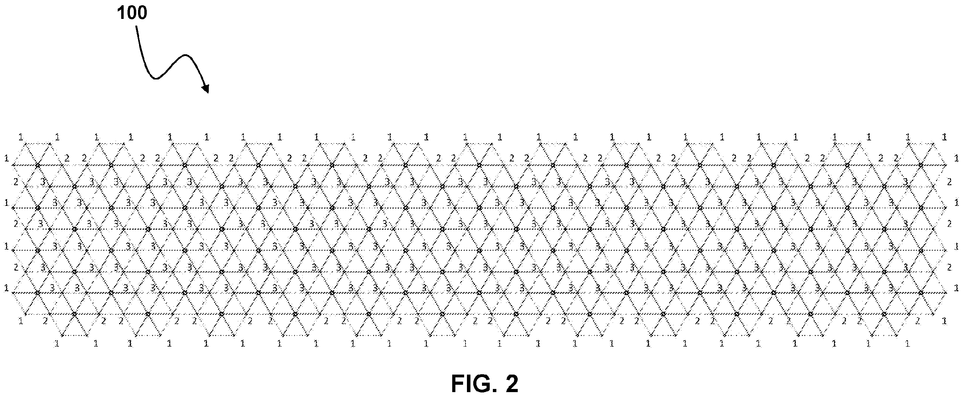

Fig. 2 zeigt eine Planskizze eines zweiten Ausführungsbeispiels eines besonders bevorzugt ausgestalteten Windparks nach der Erfindung in Draufsicht. Mit dieser Planskizze wird gegenüber Fig. 1 eine längliche Konfiguration des Windparks erreicht, wobei auch hier durch die parkettierte Anordnung der Gründungselemente 10 gegenüber einer solitären Anordnung von Offshore-Windenergieanlagen in einem Feld eine erhebliche Einsparung an Gründungsmaterial erreicht werden kann.

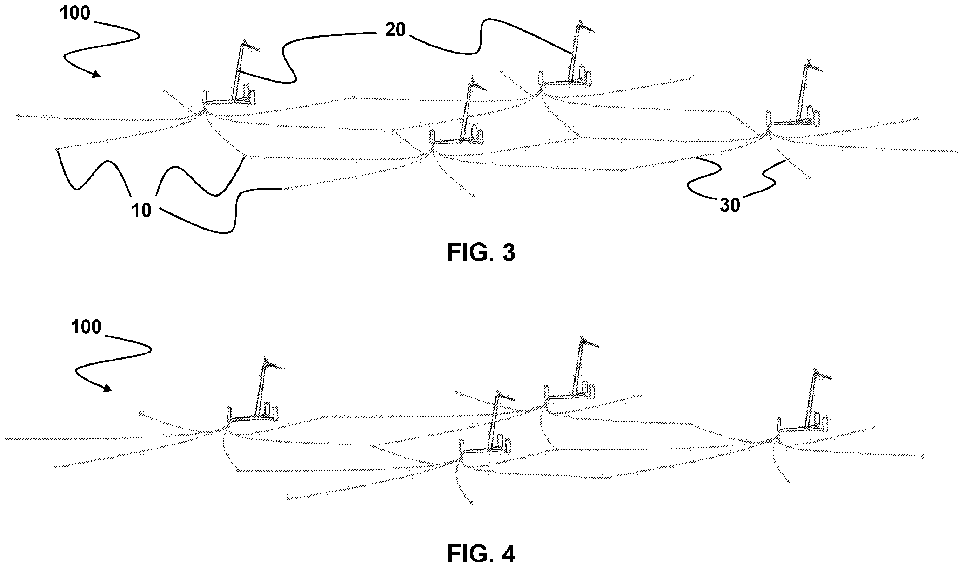

Fig. 3 zeigt einen Ausschnitt eines Windparks nach der Erfindung mit einigen benachbart angeordneten schwimmenden Windenergieanlagen in Ausgangsstellung. In dieser Position sind die schwimmenden Windenergieanlagen 20 in dem dargestellten Windpark 100 auf der Wasseroberfläche im Mittelpunkt der Hexagone angeordnet, wobei alle die Windenergieanlage 20 mit den Gründungselementen 10 verbindenden Verbindungsmittel 30 durchhängen.

Fig. 4 zeigt den Ausschnitt des Windparks aus Fig. 3 unter Belastung bei einer Windrichtung von links. Unter diesen Bedingungen driften die Windenergieanlagen 20 in Windrichtung nach rechts, sodass die links von den Windenergieanlagen 20 angeordneten Verbindungsmittel 30 gestrafft werden und die Windenergieanlagen 20 an einem weiteren Abdriften hindern. Die rechts von den Windenergieanlagen 20 angeordneten Verbindungsmittel 30 hingegen sind erschlafft.

## Patentansprüche

1. Offshore-Windpark (100) mit
- einer Mehrzahl von in einen Gewässerboden eingebrachten Gründungselementen (10), die die Ecken einer Mehrzahl von parkettierten Hexagonen ausbildend angeordnet sind, und
- einer Mehrzahl von schwimmenden Offshore-Windenergieanlagen (20), wobei jeweils eine schwimmende Offshore-Windenergieanlage (20) innerhalb je eines Hexagons mit den das Hexagon ausbildenden Gründungselementen (10) verbunden ist,
**dadurch gekennzeichnet, dass**
die schwimmenden Offshore-Windenergieanlagen (20) mit den Gründungselementen (10), die ausgewählt sind aus der Gruppe von Gründungselementen (10) bestehend aus Gründungspfahl, Schwergewichtsgründung und Suction-Bucket-Fundament, mittels als Kette und/oder Seil oder einer Kombination aus Kette und Seil ausgebildeten, durchhängenden Verbindungsmitteln (30) verbunden sind,
wobei jeweils ein den Gründungselementen (10) naher Abschnitt der Verbindungsmittel (30) auf dem Gewässerboden aufliegt und die Verbindungsmittel (30) eine Länge aufweisen, die ein Driften der Offshore-Windenergieanlagen (20) innerhalb einer Kreisfläche mit einem Radius von bis zu 10 % der Hexagon-Umkreisradien um den jeweiligen Hexagon-Mittelpunkt zulassen.

2. Offshore-Windpark nach Anspruch 1, **dadurch gekennzeichnet, dass** die als Kombination aus Kette und Seil ausgebildeten Verbindungsmittel (30) mit ihrem Kettenanteil an den Gründungselementen (10) und mit ihrem Seilanteil an der schwimmenden Offshore-Windenergieanlage (20) verbunden sind.

3. Verfahren zum Errichten eines Offshore-Windparks (100) nach einem der vorhergehenden Ansprüche, **gekennzeichnet durch** die Schritte:
- Einbringen einer Mehrzahl von aus der Gruppe von Gründungselementen (10) bestehend aus Gründungspfahl, Schwergewichtsgründung und Suction-Bucket-Fundament ausgewählten Gründungselementen (10) in den Boden eines Gewässers derart, dass die Gründungselemente (10) die Ecken einer Mehrzahl von parkettierten Hexagonen ausbilden;
- Verbinden der jeweils ein Hexagon ausbildenden Gründungselemente (10) mit einer gemeinsamen Boje mittels einer Mehrzahl von Verbindungsmitteln (30), die jeweils als Kette und/oder Seil oder einer Kombination aus Kette und Seil ausgebildet sind; und
- Verbinden der an der Boje befestigten Verbindungsmittel (30) mit einer schwimmenden Windenergieanlage (20) derart, dass die Verbindungsmittel (30) durchhängen und jeweils ein den Gründungselementen (10) naher Abschnitt der Verbindungsmittel (30) auf dem Gewässerboden aufliegt.

4. Verfahren nach Anspruch 3, **dadurch gekennzeichnet, dass** das Einbringen der Gründungselemente (10) an einer Position erfolgt, die mittels eines Positionsbestimmungssystems vorbestimmt ist.

5. Verfahren nach einem der Ansprüche 3 und 4, **dadurch gekennzeichnet, dass** die Boje ein Kupplungselement zum Verbinden mit der schwimmenden Windenergieanlage (20) aufweist.

6. Verfahren nach einem der Ansprüche 3 bis 5, **gekennzeichnet durch** den Schritt: Verbinden der Boje oder der schwimmenden Windenergieanlage (20) mit einem Seekabel.

7. Verfahren nach Anspruch 6, **dadurch gekennzeichnet, dass** die Boje eine elektrische Kupplung zum Verbinden des Seekabels mit den elektrischen Einrichtungen der Windenergieanlage (20) aufweist.

## Claims

1. Offshore wind farm (100) comprising
- a plurality of foundation elements (10) which are introduced into the bottom of a body of water and are arranged so as to form the corners of a plurality of inlaid hexagons, and
- a plurality of floating offshore wind turbines (20), with each floating offshore wind turbine (20) being connected within a hexagon to the foundation elements (10) forming the hexagon,
**characterized in that**
the floating offshore wind turbines (20) are connected to the foundation elements (10), which are selected from the group of foundation elements (10) consisting of foundation pile, gravity foundation and suction bucket foundation, by means of sagging connecting means (30) formed as a chain and/or rope or a combination of chain and rope,
with a portion of the connecting means (30) close to the foundation elements (10) resting on the bottom of the body of water in each case and the connecting means (30) having a length which permits drifting of the offshore wind turbines (20) within a circular area with a radius of up to 10% of the hexagon circumference radii around the relevant hexagon center point.

2. Offshore wind farm according to claim 1, **characterized in that** the connecting means (30) formed as a combination of chain and rope are connected with their chain portion to the foundation elements (10) and with their rope portion to the floating offshore wind turbine (20).

3. Method for setting up an offshore wind farm (100) according to either of the preceding claims, **characterized by** the steps of:
- introducing a plurality of foundation elements (10) selected from the group of foundation elements (10) consisting of foundation pile, gravity foundation and suction bucket foundation into the bottom of a body of water in such a way that the foundation elements (10) form the corners of a plurality of inlaid hexagons;
- connecting the foundation elements (10), each forming a hexagon, to a common buoy by means of a plurality of connecting means (30), each of which is formed as a chain and/or rope or a combination of chain and rope; and
- connecting the connecting means (30) attached to the buoy to a floating wind turbine (20) in such a way that the connecting means (30) sag and a portion of the connecting means (30) close to the foundation elements (10) rests on the bottom of the body of water.

4. Method according to claim 3, **characterized in that** the foundation elements (10) are introduced at a position which is predetermined by means of a position determination system.

5. Method according to either claim 3 or claim 4, **characterized in that** the buoy has a coupling element for connecting to the floating wind turbine (20).

6. Method according to any of claims 3 to 5, **characterized by** the step of: connecting the buoy or the floating wind turbine (20) to an undersea cable.

7. Method according to claim 6, **characterized in that** the buoy has an electrical coupling for connecting the undersea cable to the electrical equipment of the wind turbine (20).

## Revendications

1. Parc éolien en mer (100) comportant
- une pluralité d'éléments de fondation (10) introduits dans un fond de plan d'eau, lesquels sont conçus pour former les coins d'une pluralité d'hexagones parquetés, et
- une pluralité d'éoliennes en mer (20) flottantes, dans lequel une éolienne en mer (20) flottante est respectivement reliée, à l'intérieur de chaque hexagone, aux éléments de fondation (10) formant l'hexagone,
**caractérisé en ce que**
les éoliennes en mer (20) flottantes sont reliées aux éléments de fondation (10), lesquels sont choisis dans le groupe d'éléments de fondation (10) constitué par un pieu de fondation, une fondation gravitaire et une fondation à godets d'aspiration, au moyen des moyens de liaison (30) infléchis et conçus sous la forme de chaîne et/ou de câble ou d'une combinaison de chaîne et de câble,
dans lequel respectivement une section des moyens de liaison (30) à proximité des éléments de fondation (10)
repose au fond de plan d'eau et les moyens de liaison (30) présentant une longueur qui permet aux éoliennes en mer (20) de dériver à l'intérieur d'une zone circulaire comportant un rayon allant jusqu'à 10 % des rayons circonférentiels d'hexagone autour du point central d'hexagone respectif.

2. Parc éolien en mer selon la revendication 1, **caractérisé en ce que** les moyens de liaison (30) conçus sous la forme de combinaison de chaîne et de câble sont reliés, au moyen de leur partie de chaîne, aux éléments de fondation (10) et, au moyen de leur partie de câble, aux éoliennes en mer (20) flottantes.

3. Procédé de construction d'un parc éolien en mer (100) selon l'une quelconque des revendications précédentes, **caractérisé par** les étapes suivantes :
- l'introduction d'une pluralité d'éléments de fondation (10) choisis dans le groupe d'éléments de fondation (10) constitué par un pieu de fondation, une fondation gravitaire et une fondation à godets d'aspiration dans un fond de plan d'eau de telle sorte que les éléments de fondation (10) forment les coins d'une pluralité d'hexagones parquetés ;
- la liaison des éléments de fondation (10) formant respectivement un hexagone à une bouée commune au moyen d'une pluralité de moyens de liaison (30), lequel sont respectivement conçus sous la forme de chaîne et/ou de câble ou d'une combinaison de chaîne et de câble ; et
- la liaison des moyens de liaison (30) fixés à la bouée à une éolienne (20) flottante de telle sorte que les moyens de liaison (30) sont infléchis et respectivement une section des moyens de liaison (30) à proximité des éléments de fondation (10) repose au fond de plan d'eau.

4. Procédé selon la revendication 3, **caractérisé en ce que** l'introduction des éléments de fondation (10) est effectuée à une position, laquelle est prédéfinie au moyen d'un système de détermination de position.

5. Procédé selon l'une des revendications 3 et 4, **caractérisé en ce que** la bouée comporte un élément de couplage destiné à la liaison à l'éolienne (20) flottante.

6. Procédé selon l'une quelconque des revendications 3 à 5, **caractérisé par** l'étape suivante : la liaison de la bouée ou de l'éolienne (20) flottante à un câble sous-marin.

7. Procédé selon la revendication 6, **caractérisé en ce que** la bouée comporte un couplage électrique destiné à relier le câble sous-marin aux dispositifs électriques de l'éolienne (20).
